# EUROPEAN PATENT APPLICATION

(11) **EP 4 807 399 A1**
(43) Date of publication of application: **16.09.2026**
(21) Application number: 25382244.9
(22) Date of filing: 14.03.2025
(51) Int. Cl.: G01S 19/20, G01S 19/50

(54) **COMPUTER IMPLEMENTED METHOD FOR COMPUTING A PROTECTION LEVEL AND DEVICE THEREOF**

(71) Applicant: GMV Aerospace and Defence S.A., 28760 Tres Cantos Madrid (ES)
(72) Inventor: AZAOLA SÁENZ, Miguel, Tres Cantos (ES); MORENO LÓPEZ, Ginés, Tres Cantos (ES)
(74) Representative: Elion IP, S.L.

(57) **Abstract**

The present disclosure relates to a computer implemented method for computing a protection level *PL* of a state estimate *p̂* from a provided input state estimate *p*₀; the method comprising:
- obtaining an initial state estimate *p_{c}* which lies in a given subspace S;
- obtaining a matrix F of partial derivatives of a local parametrisation f of the given subspace S around the initial state estimate *p_{c},* which local parametrisation *f* is a function of a set of parameters *α*;
- computing the state estimate *p̂* as follows: $\hat{p} = {p}_{c} + F ⋅ Δ α$ wherein:
∘ $Δ α = {\left({\hat{H}}^{T}W\hat{H}\right)}^{- 1} {\hat{H}}^{T} {Wr}_{c} ,$
∘ $\hat{H} = H ⋅ F ,$
o *H* is a provided observation matrix,
o *W* is a weighting matrix,
o *r_{c}* is an initial vector of residuals computed as: ${r}_{c} = {r}_{0} + H \left({p}_{0}-{p}_{c}\right)$ *r*₀ being a provided input vector of residuals;
wherein the protection level *PL* of the state estimate *p̂* is computed as: $PL = k ⋅ {\left‖\hat{r}\right‖}_{W} ⋅ G$ *k* being a scalar factor, *r̂* being a vector of residuals, ${\left‖\hat{r}\right‖}_{W} = \sqrt{{\hat{r}}^{T} W \hat{r}}$, and *G* being a geometric factor computed using the matrix F.

## Description

### TECHNICAL FIELD

The present disclosure is applicable in any field in which a linear estimation method is used for determining or estimating the state of a physical system. Particularly, this method finds especial application in the field of satellite-based navigation (or GNSS) where a position and other parameters (such as clock parameters) that define the state of a GNSS receiver are estimated using techniques that involve the linearization of a set of equations, known as the GNSS observation equations. The proposed method is suitable in a wide variety of applications such as aircraft navigation, approach and landing operations, railway signalling, automotive autonomous driving, among others.

### BACKGROUND

As previously stated, the present disclosure is applicable to any field of science and engineering in which linear estimation techniques are used, such as radar systems, signal processing, computer vision, orbit determination, spacecraft attitude determination and many others. The present disclosure is of particular interest in applications where the estimation error needs to be bounded with great confidence, which is usually the case of safety-critical applications such as those found in the aviation domain, autonomous vehicles (cars, vessels...), railway signaling systems etc. These applications often use the concept of Protection Level, *PL,* which intends to provide such a bound (up to certain level of confidence previously established) to the estimation errors of the linear estimation technique.

More specifically, there is a constant need for improving positioning systems based on GNSS measurements, to obtain a precise estimation of the receiver position. In fact, for many applications of GNSS navigation, accuracy is not the only performance parameter that matters; reliability must also be provided. For instance, the positioning technology used in aircraft navigation must reach high accuracy standards, but also some mechanisms must be put in place to ensure that this high level of accuracy is maintained at any time, especially during critical operations, such as final approach and landing manoeuvres, alerting the pilot otherwise.

This can be solved, in the case of a GNSS-based system, by adding a method of navigational integrity. Integrity provides the necessary guarantee that users are where they are supposed to be (i.e. where the navigation system says they are).

### SUMMARY

**This** disclosure presents a method for computing a protection level with improved performance, resulting in better (smaller) protection levels.

The present disclosure relates to a computer implemented method for computing a protection level *PL* of a state estimate *p̂* from a provided input state estimate *p*₀; the state estimate *p̂* is computed and is constrained to lie on a given subspace *S.* That is, the subspace S and the input state estimate *p*₀ are at least provided as input to the method.

The computer implemented method comprises:
- obtaining an initial state estimate *p_{c}*, which initial state estimate *p_{c}* lies on the given subspace *S*;
- obtaining a matrix *F* of partial derivatives of a local parametrisation *f* of the given subspace *S* around the initial state estimate *p_{c},* which local parametrisation *f* is a function of a set of parameters *α*;
- computing the state estimate *p̂* using the matrix *F* and the initial state estimate *p_{c}*;
- computing the protection level *PL* of the state estimate *p̂* also making use of the matrix *F.*

That is, according to the method disclosed herein, an initial state estimate *p_{c}* which lies in the given subspace *S* is obtained, and this initial state estimate *p_{c}* is used as initial state of a least squares computation to compute a state estimate *p̂*, this least squares computation making use of the matrix *F.* Then, the protection level *PL* is computed for the state estimate *p̂*, also making use of the matrix *F*, which encodes the local structure of the subspace *S,* to optimise the size of the protection level *PL.*

It should also be noted that the three objects, the input state estimate *p*₀, the initial state estimate *p_{c}* and the (final) state estimate *p̂* are meant to be objects of the same kind. Namely, all three are state vectors, each of them obtained through some type of estimation procedure, thus the name "state estimate" used for all three. In the sequel, the symbol *p* (without subscripts) is used to refer to any (generic) state vector, unknown in principle, and hence not necessarily obtained as the result of an estimation process. This ill allows to refer to general properties of state vectors and to operations performed on them whose results or conclusions can therefore be applied to any particular object of this kind (such as *p*₀, *p_{c}* or*p̂*).

It should be noted that throughout the present disclosure, the term state vector is used to refer to a vector describing the state of a physical system. The term state estimate is used to refer to any state vector obtained by means of an estimation process. The actual state of the physical system (otherwise referred to as the user state or user state vector), is what the estimation process is aimed at computing to the best possible accuracy. When the physical system is a GNSS positioning device, its state vector is typically described by a vector comprising three spatial coordinates (associated to the position in space of the GNSS device) and one or more so-called clock parameters describing the state of the GNSS device's internal clock. The set of all possible state vectors is the state space. For instance, in a GNSS navigation setup in which the state vector comprises three spatial coordinates and one clock parameter, the state space is ${ℝ}^{4}$, that is, the set of all possible 4-tuples of real numbers (three of which are the spatial coordinates, the fourth being the clock parameter).

The computer implemented method described in the present disclosure does not prescribe the structure of a generic state vector. However, throughout the present disclosure, state vector instances, whether generic, such as *p*, or specific, such as *p*₀, *p_{c}* or *p̂*, all have the same structure. For instance, in the GNSS navigation context, a generic state vector may comprise three spatial coordinates and one clock parameter. Then, the state estimates *p*₀, *p_{c}* and *p̂*, also comprise three spatial coordinates and one clock parameter.

It should be noted that the protection level *PL* may relate to all components of a state vector or to only a subset of them. For instance, in the context of GNSS navigation, it is common (although not compulsory) that the state vector comprises three spatial coordinates and one clock parameter, and that the protection level *PL* is computed as a bound for only a subset of the spatial coordinates, such as the horizontal coordinates, or the vertical coordinate.

Along with the subspace *S* and the input state estimate *p*₀, the method of the present disclosure receives as inputs an observation matrix *H* and an input vector of residuals *r*₀. In the case of a GNSS application, the observation matrix *H* is typically the matrix of partial derivatives of the so-called GNSS observation equations or pseudo-range equations, whereas the input vector of residuals *r*₀ is the vector of estimation residuals resulting from the estimation of *p*₀ (regardless of the method used to obtain *p*₀, whether it is least-squares, Kalman filtering or any other, as long as the input vector of residuals *r*₀ reflects the lack of fit of the used observations to the input state estimate *p*₀).

Optionally a weighting matrix *W* can also be provided as input. This weighting matrix *W* modifies the relative weights of the different rows of the observation matrix *H* and potentially establishes correlations between them. Such weighting matrix *W* is typically a positive definite symmetric square matrix whose size equals the number of rows of *H.* If the weighting matrix *W* is not provided as input, then it is defined as the identity matrix of the right size (i.e., the number of rows of *H*). Thus, in what follows, the weighting matrix *W* is always defined.

The given subspace *S* is a subset of the state space which the user's state vector is known to lie in, although this is not necessarily reflected in the input state estimate *p*₀. Thus, the given subspace *S* can be understood as a constraining subspace. The method of the present disclosure provides means to constrain the state vector to the given subspace *S,* thus ensuring that the new state estimate *p̂* resulting from the method lies in *S* and exploits the constraining character of *S* to reduce the size of the protection level *PL,* thus improving its usability.

The subspace *S* is typically a subspace of lower dimension than that of the state space, and is preferably a smooth subspace. The subspace *S* may be specified in different forms.

In certain embodiments, the subspace *S* may be specified by means of implicit equations as follows: $S = \left\{p : ψ\left(p\right)=0\right\}$ wherein *ψ* is a function of the state vector *p* and the expression *ψ*(*p*) = 0 is a vector expression representing one or more implicit equations. Namely, the number of implicit equations is the codimension of *S,* that is, the difference between the dimension of the state space and the dimension of *S.*

In these embodiments in which the subspace *S* is specified by means of implicit equations, the step of obtaining the initial state estimate *p_{c}* in the given subspace *S* may comprise performing a least-squares computation step involving an augmented observation matrix *H̅*, which augmented observation matrix *H̅* is constructed using the provided observation matrix *H* and the matrix Ψ of partial derivatives of the implicit equations *ψ*.

The least-squares computation step weighs the linearized implicit equations Ψ heavily compared to the observation matrix *H*, and may need to be iterated several times to converge and stabilize, and to finally yield an initial state vector *p_{c}* lying on the subspace S which is used as the initial state estimate *p_{c}* to compute the state estimate *p̂*.

Specifically, in these embodiments, the initial state estimate *p_{c}* is computed as: ${p}_{c} = {p}_{0} + {\left({\overline{H}}^{T}\overline{W}\overline{H}\right)}^{- 1} {\overline{H}}^{T} \overline{W} \overline{r}$ wherein:
∘ *H̅* is an augmented observation matrix constructed using the observation matrix *H* and a matrix Ψ of partial derivatives of *ψ* as: $\overline{H} = \left[\begin{matrix}H \\ Ψ\end{matrix}\right] ,$
o *W̅* is an augmented weighting matrix computed as: $\overline{W} = \left[\begin{matrix}W & 0 \\ 0 & {W}_{S}\end{matrix}\right] ,$ where *W_{S}* is a scalar matrix of size equal to a codimension c of the subspace *S*,
∘ *r̅* is an augmented vector of residuals computed as: $\overline{r} = \left[\begin{matrix}{r}_{0} \\ {r}_{S}\end{matrix}\right]$ where *r*₀ is the input vector of residuals and *r_{S}* = -*ψ*(*p*₀);

In these embodiments, the matrix *F* is computed as: $F = {\left.\left(\begin{matrix}I \\ - {\left(\frac{\partial ψ}{\partial y}\right)}^{- 1} ⋅ \left(\frac{\partial ψ}{\partial x}\right)\end{matrix}\right)\right|}_{{p}_{c}}$ wherein:
∘ $\left(\frac{\partial ψ}{\partial x}\right)$ is the matrix of partial derivatives of *ψ* with respect to *x*,
∘ $\left(\frac{\partial ψ}{\partial y}\right)$ is the matrix of partial derivatives of *ψ* with respect to *y*,
∘ *y* is a subset of the components of the state vector *p* such that the matrix $\left(\frac{\partial ψ}{\partial y}\right)$ evaluated at the initial state estimate *p_{c}* is invertible,
∘ *x* is the subset of the components of the state vector *p* complementary to *y*.

The subspace *S* can also be specified using mathematical descriptions other than implicit equations. For instance, the subspace *S* may be specified using parametrisation. Namely, in certain embodiments, the subspace *S* is defined through a parametrisation *f: U* → *S*, which parametrisation *f* maps a set of parameters *α* ∈ *U* into a point in the subspace S, wherein $U ⊆ {ℝ}^{m}$ is the parametric space (the space in which the parameters *α* are allowed to range) and *m* is the dimension of the subspace *S*. In these embodiments, the parametrisation *f* expresses the components of any possible state vector *p* in the subspace *S*, or in a region of the subspace *S*, as a function of the set of parameters *α* in *U*: $U ∋ α ↦ f \left(α\right) = p ∈ S .$

When the subspace *S* is given by means of a parametrisation, the step of choosing an initial state estimate *p_{c}* in *S* may comprise selecting a state vector in the given subspace *S* which is within a given maximum distance *d* of the input state estimate *p*₀. This maximum distance *d* may depend on the geometry of the given subspace *S.* If the given subspace *S* has a relatively flat geometry, this maximum distance *d* can be made greater than when the given subspace *S* has very curved or sinuous geometry, which may lead the solution to not converging, or to converging to a wrong solution.

In certain embodiments wherein the subspace *S* is given by means of a parametrisation, the step of choosing the initial state estimate *p_{c}* comprises selecting the closest state vector in the given subspace *S* to the input state estimate *p*₀. Selecting the closest state vector on the subspace *S* has the advantage that the solution given by the disclosed method converges, and faster than if any other state vector on the subspace *S* is selected. This is especially advantageous for certain subspaces *S* having a wavy geometry, wherein not selecting the closest state vector to the input state estimate *p*₀ in the subspace *S* may result in a rapid divergence from the correct solution.

When the subspace *S* is defined through implicit equations *ψ*, the local parametrisation *f* of the subspace *S* around the initial state estimate *p_{c}* need not be described through an explicit mathematical expression, since only the matrix *F* of partial derivatives of *f* is subsequently used to compute the state estimate *p̂* and the protection level *PL.* The matrix *F* of partial derivatives of *f* can be obtained from the partial derivatives of *ψ*, thus making it unnecessary to obtain an explicit expression for the parametrisation *f.* However, for the purpose of describing the method, the existence of the local parametrisation *f* is assumed needed, even if only from a theoretical perspective. The existence of *f is* guaranteed by the well-known Implicit Function Theorem.

When the subspace *S* is defined through the parametrisation *f,* the parametrisation *f* can be taken to be the local parametrisation of the subspace *S* around the initial state estimate *p_{c}*, provided that *f* is defined in some open neighbourhood of the initial state estimate *p_{c}*. The matrix F is obtained in this case by direct differentiation of the mathematical expression of *f* at *α_{c}:* ${\left.F=\left(\frac{\partial f}{\partial α}\right)\right|}_{{α}_{c}}$ wherein *α_{c}* is the set of parameters which maps into the initial state estimate *p_{c}* through the local parametrisation *f.*

It is to be understood that, whenever analytical differentiation cannot be applied to obtain partial derivatives (either of *f* or of *ψ*), numerical differentiation is applied.

Once the matrix *F* of partial derivatives of the local parametrisation *f* of the subspace *S* around the initial state estimate *p_{c}* has been obtained, the method comprises computing the state estimate *p̂* as follows: $\hat{p} = {p}_{c} + F ⋅ Δ α$ wherein:
- $Δ α = {\left({\hat{H}}^{T}W\hat{H}\right)}^{- 1} {\hat{H}}^{T} {Wr}_{c} ,$
- *Ĥ = H · F*,
- *W* being the weighting matrix, and
- *r_{c}* is an initial vector of residuals obtained from the input vector of residuals *r*₀ as follows: ${r}_{c} = {r}_{0} + H \left({p}_{0}-{p}_{c}\right) .$

Alternatively, if an explicit expression for the local parametrisation *f* is available, the state estimate *p̂* can be obtained as: $\hat{p} = f \left(\hat{α}\right)$ wherein:
- $\hat{α} = {α}_{c} + Δ α ,$
- *α_{c}* is the set of parameters which maps into the initial state estimate *p_{c}* through *f,* and
- Δ*α* is computed as above.

The step of computing the protection level *PL* for the state estimate *p̂* comprises using the matrix *H̅* and a final vector of residuals *r̂,* the final vector of residuals *r̂* can be computed as follows: $\hat{r} = {r}_{c} - \hat{H} ⋅ Δ α .$

It is also possible to compute the final vector of residuals *r̂* as: $\hat{r} = {r}_{c} + H \left({p}_{c}-\hat{p}\right)$

The matrix *H̅* and the final vector of residuals *r̂* account for the fact that the state vector *p* has been constrained to the subspace *S,* yielding the state estimate *p̂*.

In certain embodiments it can be necessary to iterate the least squares computation until there are no substantial changes in the state estimate *p̂* and in the final vector of residuals *r̂*. Changes in the state estimate *p̂* and in the final vector of residuals *r̂* are to be considered substantial when their size is above respective thresholds, which thresholds can be user-defined. This way, if the subspace *S* is not sufficiently flat, iteration may guarantee that the changes in the constrained state estimate *p̂* and in the final vector of residuals *r̂* are unsubstantial.

With the state estimate *p̂* and the final vector of residuals *r̂*, the protection level *PL* associated to the state estimate *p̂* is computed as follows: $PL = k ⋅ {\left‖\hat{r}\right‖}_{W} ⋅ G$ wherein:
- *k* is a scalar factor,
- ${\left‖\hat{r}\right‖}_{W} = \sqrt{{\hat{r}}^{T} W \hat{r}} ,$
- *W* is a weighting matrix, which can be provided as input to the method or otherwise be define as the identity matrix, and
- *G* is a geometric factor.

The geometric factor *G* may be computed in different ways depending on the specific needs of the application at hand.

Most commonly, the protection level *PL* is meant to cover only a subset of the components of the state estimate *p̂*. For instance, in a GNSS application, it is common practice to compute protection levels meant to cover only the horizontal component of the user position (which position is part of the state vector), disregarding the vertical components as well as any other components of the state vector (such as clock parameters). Likewise, protection levels meant to cover only the vertical component are usually computed in certain GNSS application for which the vertical component is important (such as approach manoeuvres in aviation) disregarding the horizontal and clock components. This concept of covering only a subset of the components also applies to the present disclosure.

For instance, in a terrestrial GNSS application in which the subspace *S* is a two-dimensional surface (the subspace *S* could be a local model of a mountainous terrain) known to contain the user position, the user could be interested in a protection level meant to cover the position error along the (two) local directions of the terrain, or only one of them, or each one separately. The computation of the geometric factor *G,* described later, depends on which of these alternatives is chosen.

The scalar factor *k* can be provided as input to the method. Or the scalar factor *k* can be computed as explained in patent document EP2113786. The scalar factor *k* can also be optimised using a different assumption, depending on the relevant parameters of the state vector which are going to be protected. For instance, in the GNSS navigation context, the number of estimated parameters of the least squares estimation can be 4 (three spatial components and one clock parameter) of which only one parameter, such as the vertical component of the position) is relevant for the application at hand; thus, for the computation of the scalar factor *k* just 1 parameter is considered, and thus, the value of the scalar factor *k* is optimised.

In certain embodiments, the geometric factor G is a vector computed as: $G = \left({G}_{{α}_{1}},{G}_{{α}_{2}},…,{G}_{{α}_{n}}\right)$ wherein:
- *n is* any positive integer with *n* ≤ *m, m* being the dimension of the subspace *S,*
- *α*₁, *α*₂, *..., αₙ* are *n* of the *m* components of the set of parameters *α* and
- for each *i* ∈ {1,2, ..., *n*}: ${G}_{{α}_{i}} = {D}_{{α}_{i}} ⋅ \left‖{\left.\frac{\partial f}{\partial {α}_{i}}\right|}_{\hat{α}}\right‖$
wherein:
∘ *D_{αᵢ}* is computed as ${D}_{{α}_{i}} = \sqrt{{D}_{{α}_{i}}^{2}}$ and ${D}_{{α}_{i}}^{2}$ is taken from a dilution of precision matrix *DOP*, which dilution of precision matrix *DOP* takes the form: $DOP = \left(\begin{matrix}{D}_{{α}_{1}}^{2} & {D}_{{α}_{1} {α}_{2}} & ⋯ & {D}_{{α}_{1} {α}_{m}} \\ {D}_{{α}_{2} {α}_{1}} & {D}_{{α}_{2}}^{2} & ⋯ & {D}_{{α}_{2} {α}_{m}} \\ ⋮ & ⋮ & ⋱ & ⋮ \\ {D}_{{α}_{m} {α}_{1}} & {D}_{{α}_{m} {α}_{2}} & ⋯ & {D}_{{α}_{m}}^{2}\end{matrix}\right)$ and which dilution of precision matrix *DOP* is computed as: $DOP = {\left({\hat{H}}^{T}W\hat{H}\right)}^{- 1} ,$ and
∘ *α̂* is the set of parameters which maps into the state estimate *p̂* through the local parametrisation *f.*

In certain embodiments, the geometric factor *G* is computed as: $G = \sqrt{{G}_{{α}_{1}}^{2} + {G}_{{α}_{2}}^{2} + ⋯ + {G}_{{α}_{n}}^{2}}$ wherein:
- *n is* any positive integer with *n* ≤ *m, m* being the dimension of the subspace *S,*
- *α*₁, *α*₂, *..., αₙ* are *n* of the *m* components of the set of parameters *α* and
- for each *i* ∈ {1,2, ..., *n*}: ${G}_{{α}_{i}} = {D}_{{α}_{i}} ⋅ \left‖{\left.\frac{\partial f}{\partial {α}_{i}}\right|}_{\hat{α}}\right‖$
wherein:
o *D_{αᵢ}* is computed as ${D}_{{α}_{i}} = \sqrt{{D}_{{α}_{i}}^{2}}$ and ${D}_{{α}_{i}}^{2}$ is taken from a dilution of precision matrix *DOP*, which dilution of precision matrix *DOP* takes the form: $DOP = \left(\begin{matrix}{D}_{{α}_{i}}^{2} & {D}_{{α}_{1} {α}_{2}} & ⋯ & {D}_{{α}_{1} {α}_{m}} \\ {D}_{{α}_{2} {α}_{1}} & {D}_{{α}_{2}}^{2} & ⋯ & {D}_{{α}_{2} {α}_{m}} \\ ⋮ & ⋮ & ⋱ & ⋮ \\ {D}_{{α}_{m} {α}_{1}} & {D}_{{α}_{m} {α}_{2}} & ⋯ & {D}_{{α}_{m}}^{2}\end{matrix}\right)$ and which dilution of precision matrix *DOP* is computed as: $DOP = {\left({\hat{H}}^{T}W\hat{H}\right)}^{- 1} ,$
o *α̂* is the set of parameters which maps into the state estimate *p̂* through the local parametrisation *f.*

The geometric factor *G* can also be computed as: $G = \sqrt{1 / λ}$ wherein *λ* is the smallest positive eigenvalue of *A*, *A* being a matrix computed as: $A = BCB ,$
- matrix *B* being in turn computed as: $B = {F}_{1} {\left({F}_{1}^{T}{F}_{1}\right)}^{- 1} {F}_{1}^{T} ,$ matrix *F*₁ being a submatrix of F obtained by splitting *F* into submatrices *F*₁ and *F*₂ corresponding to the first *n* parameters *α*₁, *α*₂, ..., *αₙ* and the last *m* - *n* parameters *α*_{*n+*1}, *α*_{*n+*2}, ..., *αₘ* in *α*, respectively, as follows: $F = \left({F}_{1} {F}_{2}\right)$ *n* being any positive integer with *n* ≤ *m* and *m* being the dimension of the subspace *S,*
- matrix *C* being computed as follows: $C = E - {EF}_{2} {\left({F}_{2}^{T}{EF}_{2}\right)}^{- 1} {F}_{2}^{T} E$ matrix *E* being computed as: $E = {H}^{T} WH .$

As previously indicated, the disclosed method has specific application in the GNSS context. In these GNSS applications, the state estimate *p̂* is a GNSS navigation solution and the computed protection level *PL* is compared against a threshold value so as to make a decision regarding the reliability of the provided navigation solution. Specifically, if the protection level *PL* is above the threshold value, the provided navigation solution is not considered safe, and an alarm is typically raised.

A further aspect of the present disclosure relates to a device which comprises a processor configured for carrying out the method for computing protection levels as defined in the foregoing.

In the context of GNSS, the device is typically a GNSS positioning device which is configured to provide a GNSS navigation solution and associated protection level *PL.*

In certain embodiments, the processor is further configured to compare the computed protection level *PL* against a preestablished threshold value, and in response, to take some action. As way of example, an alarm is raised if the computed protection level *PL* is above the preestablished threshold. The alarm can be in the form of a sound, a visual indication, a vibration, etc.

The method can be run in one or more devices in an isolated manner and/or in a distributed manner. That is to say, one, some or all steps may be run by a same processing device, or one or some steps may be run by one processing device and some other step or steps may be run by one or more other processing devices or even be run in distributed manner, which means that several processing devices cooperate to run one or more steps. In this sense, the steps are digitally run.

In certain embodiments the subspace *S* is defined by means of a digital elevation model. The subspace *S* can also be defined as a railway network or road network or a digital map thereof.

The method and device proposed herein are especially suitable for railway applications where the position is constrained to the railway track. In these applications, the given subspace *S* is linked to the track geometry. The protection level *PL* provided under these considerations is typically meant to bound the positional error of a train along the track.

The different aspects and embodiments defined in the foregoing may be combined with one another, as long as they are compatible with each other.

Additional advantages and features of the present disclosure will become apparent from the detailed description that follows and will be particularly pointed out in the appended claims.

### BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:
Figure 1 shows a flow diagram of a method for computing a protection level *PL* of a state estimate *p̂*.
Figure 2 shows a block diagram of a device which includes a processor for at least executing the method for computing a protection level *PL* of a state estimate *p̂*.

### DETAILED DESCRIPTION

The following description is not to be taken in a limiting sense but is given solely for the purpose of describing the broad principles of the present disclosure. Embodiments thereof will be described by way of example, with reference to the above-mentioned drawings.

In the example that follows, it is assumed that an estimation process of the state of some physical system (such as a GNSS receiver) has taken place which has produced a state estimate *p*₀, which the method of the present disclosure receives as an input. Subsequently a state estimate *p̂* is obtained, and its associated protection level *PL* is also computed, both of which are obtained making use of actual system state being constrained to lie on a given subspace *S* of the state space (such as a curve or a surface). The subspace *S* is also provided as an input to the method. The proposed method is able to achieve better (smaller) protection levels for the state estimate *p̂* than those that could be obtained for the input state estimate *p*₀.

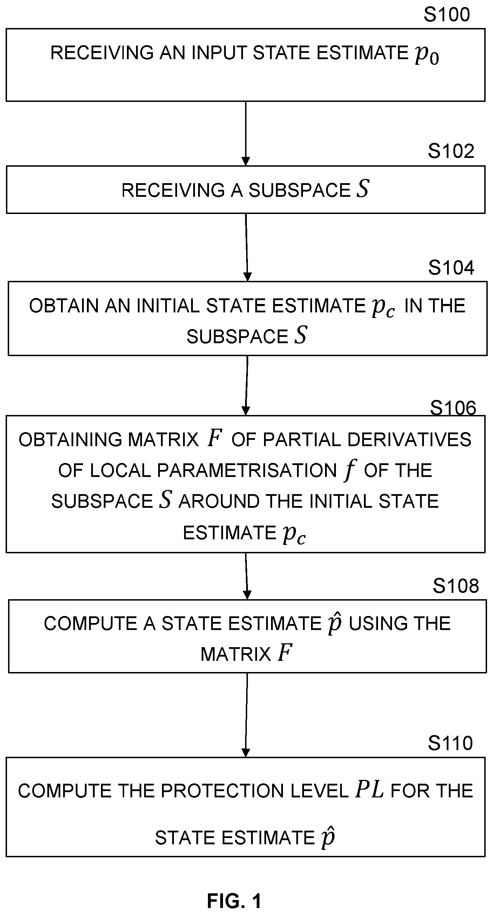

As shown in Figure 1, starting from the input state estimate *p*₀ (step S100), and provided the *m*-dimensional subspace *S* (step S102), the protection level *PL* is essentially computed as follows:
- an initial state estimate *p_{c}* is obtained which lies in the subspace *S* (step S104);
- a matrix *F* of partial derivatives of local parametrisation *f* of the subspace *S* around the initial state estimate *p_{c}* is obtained (step S106)
- a state estimate *p̂* is computed using the matrix F (step S108);
- the protection level *PL* for the state estimate *p̂* is computed (step S110).

The following elements are also provided as input to the method (although not explicitly shown in Figure 1):
- An observation matrix *H*
- An input vector of residuals *r*₀.

Optionally a weighting matrix *W* is also provided as input. This weighting matrix *W* modifies the relative weights of the different rows of the observation matrix *H* and potentially establishes correlations between them. Such weighting matrix *W* is typically a positive definite symmetric square matrix whose size equals the number of rows of *H.* If the weighting matrix *W* is not provided as input, then it is defined as the identity matrix of the right size (i.e., the number of rows of *H*). Thus, in what follows, *W* is always defined.

The method comprises:
- obtaining an initial state estimate *p_{c}* which lies on the given subspace *S*;
- computing a matrix *F* of partial derivatives of a local parametrisation *f* of the subspace *S* around the initial state estimate *p_{c}*;
- using the initial state estimate *p_{c}* as initial state of a least squares computation to compute a state estimate *p̂* (also referred to as constrained state estimate *p̂*, the least squares computation making use of the matrix *F*;
- computing the protection level *PL* for the state estimate *p̂*, also making use of the matrix *F*, which encodes the local structure of the subspace *S,* to optimise the size of the said protection level.

A state vector *p* is a vector containing the relevant parameters needed to describe the state of a physical system. For instance, in the case of a GNSS positioning device or receiver, the relevant parameters are typically the three spatial coordinates *x, y* and *z* of the receiver position (otherwise known as the user position) and one or more so-called clock parameters describing the state of the receiver's internal clock. Grouping the clock parameters in a so-called clock component *b* (which may comprise several clock parameters), the state vector of the GNSS receiver can be expressed as: $p = \left(\begin{matrix}x \\ y \\ z \\ b\end{matrix}\right)$

It is emphasised that the above description of *p* is provided as an example, and in particular in the context of a GNSS positioning application. The method of the present disclosure does not require *p* to contain any specific number of components or the said components to have any specific meaning, such as the spatial position of a device or the state of a clock.

The actual state vector of a physical system is generally unknown and can only be estimated from so-called observations or measurements. A state estimate is an estimate of the system's state vector obtained from observations through some kind of estimation procedure (no matter which one). The present example requires that an input state estimate *p*₀ be provided.

Continuing with the GNSS example above, the input state estimate *p*₀ could comprise an initial set of spatial coordinates *x*₀, *y*₀ and *z*₀, and an initial set *b*₀ of clock parameters: ${p}_{0} = \left(\begin{matrix}{x}_{0} \\ {y}_{0} \\ {z}_{0} \\ {b}_{0}\end{matrix}\right)$

In certain cases, the subspace S is defined by means of implicit equations as follows: $S = \left\{p:ψ\left(p\right)=0\right\}$ wherein *ψ* is a function of the state vector *p* and the expression *ψ*(*p*) = 0 is a vector expression representing one or more implicit equations. Namely, the number *c* of implicit equations is the codimension of *S,* that is, the difference between the dimension of the state space and the dimension of *S.*

For instance, in an example in which a generic state vector *p* comprises three spatial coordinates *x, y* and *z* and some amount *v* of other non-spatial components (such as clock parameters), which non-spatial components are, for the sake of simplicity, grouped hereafter in a sub-vector *b* (containing *v* elements), the subspace *S* may be defined through one implicit equation *ψ*(*p*) = 0, wherein: $ψ \left(p\right) = ψ \left(x y z b\right) = {x}^{2} + {y}^{2} + {z}^{2} - {R}^{2}$ which is the equation of a [2 + *v*]-dimensional hypercylinder embedded as a subspace of the [3 + *v*]-dimensional state space. The codimension c of *S* in this case is 1. When applied to this particular example, the state estimate *p̂* obtained by the method of the present disclosure has the property that its spatial component (formed by the three spatial coordinates *x, y* and *z*) is constrained to lie on a 2-dimensional sphere of radius *R* defined by the equation *x*² *+ y*² + *z*² = *R*².

In another example using implicit equations to describe the subspace *S* the structure of the state vector *p* is as in the preceding example (three spatial coordinates *x, y* and *z* and a non-spatial component *b* consisting of *v* non-spatial parameters) and the subspace *S* is described by the implicit equations: $ψ \left(p\right) = \left(\begin{matrix}{ψ}_{1} \left(p\right) \\ {ψ}_{2} \left(p\right)\end{matrix}\right) = 0$ wherein $\left\{\begin{matrix}{ψ}_{1} \left(p\right) & = & {x}^{2} + {y}^{2} + {z}^{2} - {R}^{2} \\ {ψ}_{2} \left(p\right) & = & z\end{matrix}\right.$ which are the equations of a [1 + *v*]-dimensional hypercylinder embedded as a subspace of the [3 + *v*]-dimensional state space. The codimension *c* of the subspace *S* in this case is 2. When applied to this particular example, the state estimate *p̂* provided by the method of the present disclosure has the property that its spatial component is constrained to lie on a circumference, which is the equatorial line of a 2-dimensional sphere of radius *R.*

In other examples, the subspace *S* is specified through a parametrisation *f,* which is defined only locally, in the vicinity of *p*₀: $U ∋ α ↦ f \left(α\right) = p ∈ S$ being:
- *α* is a set of parameters, otherwise called vector of parameters,
- $U ⊆ {ℝ}^{m}$is the so-called parametric space, a subset of ${ℝ}^{m}$ within which the parameters *α* are allowed to range,
- m is the dimension of *S,* and
- *f* is a function mapping each *α* ∈ *U* into some *p* ∈ *S*.

For instance, in an example in which a generic state vector *p* comprises three spatial coordinates *x, y* and *z* and some *v* other non-spatial parameters (grouped hereafter in a sub-vector *b*) and the subspace *S* is a [2 + *v*]-dimensional hypercylinder of radius *R,* the subspace *S* is defined through a parametrisation *f* by a set of parameters *α* which represent longitude (*lon*) and latitude (*lat*) of a point in a 2-dimensional sphere of radius *R* and the non-spatial parameters comprised by *b,* that is, $α = \left(\begin{matrix}lon \\ lat \\ b\end{matrix}\right)$ and the parametrisation *f* is defined as: $f \left(α\right) = f \left(\begin{matrix}lon \\ lat \\ b\end{matrix}\right) = \left(\begin{matrix}R cos \left(lon\right) cos \left(lat\right) \\ R sin \left(lon\right) cos \left(lat\right) \\ R sin \left(lat\right) \\ b\end{matrix}\right) ∈ S$ wherein: $lon ∈ \left(-π,π\right)$ $lat ∈ \left(-\frac{π}{2},\frac{π}{2}\right)$ $b ∈ {ℝ}^{ν}$ $U = \left(-π,π\right) \times \left(-\frac{π}{2},\frac{π}{2}\right) \times {ℝ}^{ν} ⊆ {ℝ}^{2 + ν}$

In another example in which a generic state vector *p* has the same structure as in the previous example (three spatial coordinates *x, y* and *z* and a non-spatial component b consisting of *v* non-spatial parameters), the subspace *S* is a [1 + *v*]-dimensional hypercylinder of radius *R* and the subspace *S* is defined through a parametrisation *f* by a set of parameters *α* which represent the longitude (*lon*) of a point in the equatorial line of a 2-dimensional sphere of radius *R* and the non-spatial parameters comprised by *b,* that is, $α = \left(\begin{matrix}lon \\ b\end{matrix}\right)$

The parametrisation *f* is defined as: $f \left(α\right) = f \left(\begin{matrix}lon \\ b\end{matrix}\right) = \left(\begin{matrix}R cos \left(lon\right) \\ R sin \left(lon\right) \\ 0 \\ b\end{matrix}\right) ∈ S$ wherein: $lon ∈ \left(-π,π\right)$ $b ∈ {ℝ}^{ν}$ $U = \left(-π,π\right) \times {ℝ}^{ν} ⊆ {ℝ}^{1 + ν}$

The step of obtaining an initial state estimate *p_{c}* in the given subspace *S* when the said subspace *S* is given by means of one or more implicit equations *ψ*(*p*) = 0 comprises performing a least-squares computation step involving an augmented observation matrix *H̅*, which augmented observation matrix *H̅* is constructed using the provided observation matrix *H* and the matrix Ψ of partial derivatives of *ψ* as follows: $\overline{H} = \left[\begin{matrix}H \\ Ψ\end{matrix}\right]$

The said least-squares computation step requires weighting the linearized implicit equations Ψ heavily compared to the observation matrix *H*, and may need to be iterated several times to converge and stabilize, and to finally yield a state vector *p_{c}* lying on *S* which will be used as the initial state estimate to compute the state estimate *p̂*.

The equations *ψ*(*p*) = 0 do not necessarily hold at the input state estimate *p*₀, since *p*₀ may not lie on *S.* In other words, it may happen that *ψ*(*p*₀) ≠ 0. Applying Taylor expansion of *ψ* at *p*₀: $ψ \left(p\right) \approx ψ \left({p}_{0}\right) + {\left.\left(\frac{\partial ψ}{\partial p}\right)\right|}_{{p}_{0}} ⋅ Δ p$ wherein Δ*p* = *p* - *p*₀ represents a small change in the different components of the state vector *p*, which small change need to be adjusted in order to satisfy the condition *ψ*(*p*) = 0 as much as possible. Since it is desired *ψ*(*p*) = 0 to hold as much as possible, Δ*p* must satisfy: $Ψ ⋅ Δ p = - ψ \left({p}_{0}\right)$ where Ψ is the matrix of partial derivatives of *ψ* at *p*₀: $Ψ = {\left.\left(\frac{\partial ψ}{\partial p}\right)\right|}_{{p}_{0}}$

It is to be noted that the number of columns of the matrix Ψ equals the dimension of the state space, as there are as many partial derivatives of each component of *ψ* as there are elements in the state vector *p*. The number of rows of the matrix Ψ equals the codimension *c* of the subspace *S,* that is, the difference between the dimension of the state space and the dimension *m* of the subspace *S.*

Denoting *r_{S}* = -*ψ*(*p*₀)*,* an augmented vector of residuals *r̅* is defined with *r_{S}* as: $\overline{r} = \left[\begin{matrix}{r}_{0} \\ {r}_{S}\end{matrix}\right]$

Likewise, an augmented observation matrix *H̅* is defined as: $\overline{H} = \left[\begin{matrix}H \\ Ψ\end{matrix}\right]$

The initial state estimate *p_{c}* is obtained as: ${p}_{c} = {p}_{0} + Δ p$ where: $Δ p = {\left({\overline{H}}^{T}\overline{W}\overline{H}\right)}^{- 1} {\overline{H}}^{T} \overline{W} \overline{r}$ and $\overline{W} = \left[\begin{matrix}W & 0 \\ 0 & {W}_{S}\end{matrix}\right]$ wherein *W_{S}* is a scalar matrix, that is, a scalar *W_{S}* (which in this case is positive) multiplied by the identity matrix, the size of which identity matrix equals the number of rows of the matrix Ψ, that is, the codimension of the subspace *S.*

The larger the scalar *w_{S}* (as compared to the largest element of *W*) the closer the initial state estimate *p_{c}* is to the subspace *S.* For sufficiently large *w_{S}*, the distance between the initial state estimate *p_{c}* and the subspace *S* is negligible, so the initial state estimate *p_{c}* can be considered to lie on the subspace *S.*

As in the previous example, the preceding steps may need be iterated (linearising the equations *ψ*(*p*) = 0, but at the new initial state estimate *p_{c}* rather than at the input state estimate *p*₀) obtaining a new refinement and new residuals, until the size of the innovation Δ*p* becomes negligible. For the sake of simplicity, to avoid the introduction of new notation, the notation *p_{c}* to refer to the state estimate resulting from these iterations is used.

The set parameters corresponding to the initial state estimate *p_{c}* through the parametrisation *f* are denoted as parameters *α_{c}.*

Before the state estimate *p̂* and corresponding protection level *PL* are computed, a matrix *F* of partial derivatives of a local parametrisation of the subspace *S* around the initial state estimate *p_{c}* is computed, regardless of the subspace *S* having been provided, whether in implicit or parametric form. Yet, the procedure to obtain this matrix *F* varies depending on the way in which the subspace *S* has been provided.

### Subspace S provided through implicit equations

If the subspace *S* has been provided through implicit equations *ψ*(*p*) = 0, the matrix *F* is obtained as follows. First, *c* linearly independent columns of the matrix Ψ of partial derivatives of *ψ* are identified (*c* being the codimension of the subspace *S*). For simplicity of the exposition and without loss of generality, it is assumed in what follows that the *c* linearly independent columns are the last *c* columns of the matrix Ψ. This means that, if the state vector *p* comprises coordinates *x*₁, ..., *xₘ*, *y*₁, ..., *y_{c}*, then the square matrix formed by all partial derivatives ${\left.\left(\frac{\partial {ψ}_{i}}{\partial {y}_{j}}\right)\right|}_{{p}_{0}}$ with 1 ≤ *i, j* ≤ *c* is non-singular.

The Implicit Function Theorem guarantees that the subspace *S* can be locally (in a neighbourhood of the initial state estimate *p_{c}*) described as the graph of a function *g* mapping the *x* coordinates into the *y* coordinates: $\left(\begin{matrix}{y}_{1} \\ ⋮ \\ {y}_{c}\end{matrix}\right) = g \left(\begin{matrix}{x}_{1} \\ ⋮ \\ {x}_{m}\end{matrix}\right)$ or, in abbreviated notation: $y = g \left(x\right)$

Therefore, the function *f,* defined in a neighbourhood of *p_{c}* as: $f \left(x\right) = \left(\begin{matrix}x \\ g \left(x\right)\end{matrix}\right)$ defines a local parametrisation of the subspace *S* around the initial state estimate *p_{c}*. In this case, the parameters *α* of the parametrisation are the first *m* coordinates of *p*, which have been denoted *x* in the above expressions. Thus, *f* can also be expressed as: $x = α {\to }^{f} \left(\begin{matrix}α \\ g \left(α\right)\end{matrix}\right) = \left(\begin{matrix}x \\ g \left(x\right)\end{matrix}\right) = p$

An explicit expression of *f* as a function of the parameters *α* (in this case, as a function of *x*) is not needed. Actually, the matrix *F* of partial derivatives of *f* at the point *α_{c} = x_{c}* which maps into *p_{c}* through *f* can be computed in terms of the partial derivatives of *ψ* as: ${\left.{\left.F=\left(\frac{\partial f}{\partial α}\right)\right|}_{{α}_{c}}=\left(\begin{matrix}I \\ - {\left(\frac{\partial ψ}{\partial y}\right)}^{- 1} ⋅ \left(\frac{\partial ψ}{\partial x}\right)\end{matrix}\right)\right|}_{{p}_{c}}$ where *I* stands for the identity matrix of the adequate size, in this case of size *m, m* being the dimension of *S.*

If the *c* columns of the matrix Ψ identified to be linearly independent are not the last *c* columns, but any other subset of *c* columns of the matrix Ψ, the procedure described above can be performed after reordering the components of the state vector *p* so that the identified c columns are moved to the last *c* positions. In other words, the above procedure is valid in general up to reordering of the state components.

As a simple example of the above general procedure to obtain the matrix *F* when the subspace *S* is described by implicit equations, a situation is considered in which the state vector *p* comprises three components *x*₁, *x*₂ and *x*₃ (and nothing else), the subspace *S* is given by the single implicit equation $ψ \left({x}_{1}, {x}_{2}, {x}_{3}\right) = 0 ,$ being $ψ \left({x}_{1}, {x}_{2}, {x}_{3}\right) = {x}_{1}^{2} + {x}_{2}^{2} + {x}_{3}^{2} - 1$ and the initial state vector *p_{c}* is: ${p}_{c} = \left(\begin{matrix}0 \\ 0 \\ 1\end{matrix}\right) .$

The matrix Ψ of partial derivatives of *ψ* is in this case: ${\left.Ψ=\left(2{x}_{1} 2{x}_{2} 2{x}_{3}\right)\right|}_{{p}_{c}} = \left(0 0 2\right)$

In this example, the dimension of the subspace *S* is *m* = 2 and its codimension is *c* = 1, so one linearly independent column of Ψ is identified. The only linearly independent column of the matrix Ψ is in this case the third. The components *x*₁, *x*₂ and *x*₃ of the state vector *p* are renamed as follows in order to keep the same notation as in the general procedure described above, which is done for the sake of clarity: $x = \left(\begin{matrix}{x}_{1} \\ {x}_{2}\end{matrix}\right)$ $y = {x}_{3}$

Thus, the state vector $p = \left(\begin{matrix}{x}_{1} \\ {x}_{2} \\ {x}_{3}\end{matrix}\right)$ can be also written as: $p = \left(\begin{matrix}x \\ y\end{matrix}\right)$

The partial derivatives of *ψ* are: $\frac{\partial ψ}{\partial x} = \left(2{x}_{1} 2{x}_{2}\right)$ $\frac{\partial ψ}{\partial y} = 2 y$

Therefore, $- {\left(\frac{\partial ψ}{\partial y}\right)}^{- 1} ⋅ \left(\frac{\partial ψ}{\partial x}\right) = \left(-\frac{{x}_{1}}{y} -\frac{{x}_{2}}{y}\right)$

And the matrix *F* is computed as: $F = {\left.\left(\begin{matrix}I \\ - {\left(\frac{\partial ψ}{\partial y}\right)}^{- 1} ⋅ \left(\frac{\partial ψ}{\partial x}\right)\end{matrix}\right)\right|}_{{p}_{c}} = \left(\begin{matrix}1 & 0 \\ 0 & 1 \\ 0 & 0\end{matrix}\right) .$

### Subspace S provided through parametrisation

If the subspace *S* is defined by means of a parametrisation *f*, then the parametrisation *f* itself is the local parametrisation for obtaining the matrix *F*. In this case, the matrix *F* is obtained by direct computation of the partial derivatives of *f*: $F = {\left.\left(\frac{\partial f}{\partial α}\right)\right|}_{{α}_{c}}$

As an example of obtaining the matrix *F* when the subspace *S* is described by a parametrisation, a situation is considered in which the state vector *p* comprises three components *x*₁, *x*₂ and *x*₃ (and nothing else), the subspace *S* is given by the parametrisation ${ℝ}^{2} ⊇ U ∍ α ↦ f \left(α\right) = p ∈ S$ given by: $f \left(α\right) = f \left({α}_{1}, {α}_{2}\right) = \left(\begin{matrix}{α}_{1} \\ {α}_{2} \\ \sqrt{1 - \left({α}_{1}^{2}+{α}_{2}^{2}\right)}\end{matrix}\right)$ being ${p}_{c} = \left(\begin{matrix}0 \\ 0 \\ 1\end{matrix}\right) .$

In this example, the parametric space *U* is: $U ≜ \left\{\left(\begin{matrix}{α}_{1} \\ {α}_{2}\end{matrix}\right)∈{ℝ}^{2}: {α}_{1}^{2}+{α}_{2}^{2}<1\right\}$

The parameters *α* which map onto *p_{c}* through the parametrisation f are: ${α}_{c} = \left(\begin{matrix}0 \\ 0\end{matrix}\right)$

Note that this example is a locally equivalent parametric version of the implicit equations example considered earlier: a two-dimensional spherical surface in a three-dimensional space, the initial state estimate *p_{c}* being at the north pole of the said spherical surface. It turns out that the parametrisation herein considered is precisely the local parametrisation from the earlier example, in which it was not obtained explicitly as there was no need for that. Now, since we have an explicit expression of the local parametrisation *f,* we can obtain the matrix *F* by directly computing the partial derivatives of *f,* yielding: $F = {\left.\left(\frac{\partial f}{\partial α}\right)\right|}_{{α}_{c}} = \left(\begin{matrix}1 & 0 \\ 0 & 1 \\ 0 & 0\end{matrix}\right)$

The method further comprises computing the state estimate *p̂* and the associated protection level *PL.* These steps are the same regardless of the way the subspace S has been provided (whether in implicit or parametric form).

Once the matrix *F* of partial derivatives of a local parametrisation *f* around *p_{c}* has been obtained, the method comprises computing the state estimate *p̂* as follows: $\hat{p} = {p}_{c} + F ⋅ Δ α$ being: $Δ α = {\left({\hat{H}}^{T}W\hat{H}\right)}^{- 1} {\hat{H}}^{T} {Wr}_{c}$ wherein:
*W* is the weighting matrix and matrix *H̅* is computed as follows: $\hat{H} = H ⋅ F$
- *r_{c}* is an initial vector of residuals obtained from the input vector of residuals *r*₀ as follows: ${r}_{c} = {r}_{0} + H \left({p}_{0}-{p}_{c}\right)$

Alternatively, if an explicit expression for *f* is available, *p̂* can be obtained as: $\hat{p} = f \left(\hat{α}\right)$ where *α̂* = *α_{c} +* Δ*α* and Δ*α* is computed as above.

For computing the protection level *PL,* a final vector of residuals *r̂* is calculated from the initial vector of residuals *r_{c}* as follows: $\hat{r} = {r}_{c} - \hat{H} ⋅ Δ α$

Alternatively, *r̂* can also be computed as: $\hat{r} = {r}_{c} + H \left({p}_{c}-\hat{p}\right)$

It may be necessary to iterate the above steps. If the subspace *S* is sufficiently flat, further iterations do not produce substantial changes in the state estimate *p̂* and in the final vector residuals *r̂*, if the initial state estimate *p_{c}* is computed as the closest point to the input state estimate *p*₀ in the subspace*S*. But the subspace *S* need not be flat, but rather sinuous; and in such case, the above steps are iterated until the changes in in the state estimate *p̂* and in the final vector residuals *r̂* can be neglected.

Once the constrained state estimate *p̂* and the final vector of residuals *r̂* have been obtained, the final step is the computation of the protection level *PL* associated to *p̂* as follows: $PL = k ⋅ {\left‖\hat{r}\right‖}_{W} ⋅ G$ wherein:
- *k* is a scalar factor,
- ${\left‖\hat{r}\right‖}_{W} = \sqrt{{\hat{r}}^{T} W \hat{r}}$
- *G* is a geometric factor.

The geometric factor *G* can be computed in different ways depending on the specific needs of the application at hand. Most commonly, the protection level *PL* is meant to cover only a subset of the components of the state estimate *p̂*. Different alternatives to compute the geometric factor *G* are provided hereafter. It is recalled that m denotes the dimension of the subspace *S,* and therefore *α* comprises *m* parameters *α*₁, *α₂*, *..., αₘ.* In what follows, *n* is a positive integer with *n* ≤ *m*.

In certain examples the geometric factor *G* is a vector *G* = (*G*_{*α*₁}, *G*_{*α*₂,} ..., *G_{αₙ}*), giving rise to a vector protection level *PL =* (*PL*_{*α*₁}, *PL*_{*α*₂}, ..., *PL_{αₙ}*) whose components are meant to bound the errors along each one of the directions of $\frac{\partial f}{\partial {α}_{1}} , \frac{\partial f}{\partial {α}_{2}} , … , \frac{\partial f}{\partial {α}_{n}}$ individually, which components can be expressed as: ${PL}_{{α}_{i}} = k ⋅ {\left‖\hat{r}\right‖}_{W} ⋅ {G}_{{α}_{1}}$ where:
- ${G}_{{α}_{1}} = {D}_{{α}_{i}} ⋅ \left‖{\left.\frac{\partial f}{\partial {α}_{i}}\right|}_{\hat{α}}\right‖$
- $i ∈ \left\{1,2,…,n\right\} ,$
- *D_{αᵢ}* is computed as ${D}_{{α}_{i}} = \sqrt{{D}_{{α}_{i}}^{2}}$ and ${D}_{{α}_{i}}^{2}$ is taken from a dilution of precision matrix *DOP*, which dilution of precision matrix *DOP* takes the form: $DOP = \left(\begin{matrix}{D}_{{α}_{1}}^{2} & {D}_{{α}_{1} {α}_{2}} & ⋯ & {D}_{{α}_{1} {α}_{m}} \\ {D}_{{α}_{2} {α}_{1}} & {D}_{{α}_{2}}^{2} & ⋯ & {D}_{{α}_{2} {α}_{m}} \\ ⋮ & ⋮ & ⋱ & ⋮ \\ {D}_{{α}_{m} {α}_{1}} & {D}_{{α}_{m} {α}_{2}} & ⋯ & {D}_{{α}_{m}}^{2}\end{matrix}\right)$ and which dilution of precision matrix *DOP* is computed as: $DOP = {\left({\hat{H}}^{T}W\hat{H}\right)}^{- 1}$
- ${\left‖\hat{r}\right‖}_{W} = \sqrt{{\hat{r}}^{T} W \hat{r}}$,
- *k* is a scalar factor.

In certain examples, the protection level *PL* is a scalar protection level meant to bound the combined error along the directions of $\frac{\partial f}{\partial {α}_{1}} , \frac{\partial f}{\partial {α}_{2}} , … , \frac{\partial f}{\partial {α}_{n}}$, for which the geometric factor *G* is computed as: $G = \sqrt{{G}_{{α}_{1}}^{2} + {G}_{{α}_{2}}^{2} + ⋯ + {G}_{{α}_{n}}^{2}}$ wherein ${G}_{{α}_{1}}^{2} , {G}_{{α}_{2}}^{2} , … , {G}_{{α}_{n}}^{2}$ are computed as in the previous example.

In this case, for producing a reliable scalar protection level, it is necessary that the directions $\frac{\partial f}{\partial {α}_{1}} , \frac{\partial f}{\partial {α}_{2}} , … , \frac{\partial f}{\partial {α}_{n}}$ be pairwise orthogonal in the state space.

In certain examples the protection level *PL* is a scalar protection level meant to bound the combined error along the directions of $\frac{\partial f}{\partial {α}_{1}} , \frac{\partial f}{\partial {α}_{2}} , … , \frac{\partial f}{\partial {α}_{n}}$, for which the geometric factor *G* is computed as: $G = \sqrt{1 / λ}$ where *λ* is the smallest positive eigenvalue of *A*, *A* being a matrix computed as: $A = BCB ,$
- matrix *B* being in turn computed as: $B = {F}_{1} {\left({F}_{1}^{T}{F}_{1}\right)}^{- 1} {F}_{1}^{T} ,$ matrix *F*₁ being a submatrix of the matrix *F* obtained by splitting the matrix *F* into submatrices *F*₁ and *F*₂ corresponding to the first *n* parameters *α*₁, *α₂*, ..., *αₙ* and the last *m - n* parameters *α*_{*n*+1}, *α*_{*n+*2}, ..., *αₘ* in *α*, respectively, as follows: $F = \left({F}_{1} {F}_{2}\right) ,$
- matrix *C* being computed as follows: $C = E - {EF}_{2} {\left({F}_{2}^{T}{EF}_{2}\right)}^{- 1} {F}_{2}^{T} E$ matrix *E* being computed as: $E = {H}^{T} WH$ *W* being a weighting matrix, either provided as input or set to be the identity matrix.

In this case, for the above procedure to produce a reliable scalar protection level, the directions $\frac{\partial f}{\partial {α}_{1}} , \frac{\partial f}{\partial {α}_{2}} , … , \frac{\partial f}{\partial {α}_{n}}$ need not be pairwise orthogonal, which is an advantage with respect to the procedure presented previously, with the drawback of a higher computational load.

The preceding examples show different computation procedures of the protection level *PL* meant to obtain error bounds covering only a subset *α*₁, *α*₂, ..., *αₙ* of the parameters *α.* The number *n* of protected parameters can range from 1 to the total number *m* of parameters in *α.* For simplicity, the *n* parameters meant to be covered have been set to be the first *n*, but the formulations provided in the preceding examples would still be valid should the protected parameters be any *n* parameters among the full set of *m* parameters, provided that the coordinates of *α* be reordered so the selected parameters to protect occupy the first *n* positions. This reordering implies changing the order of the columns of the matrix *F* accordingly.

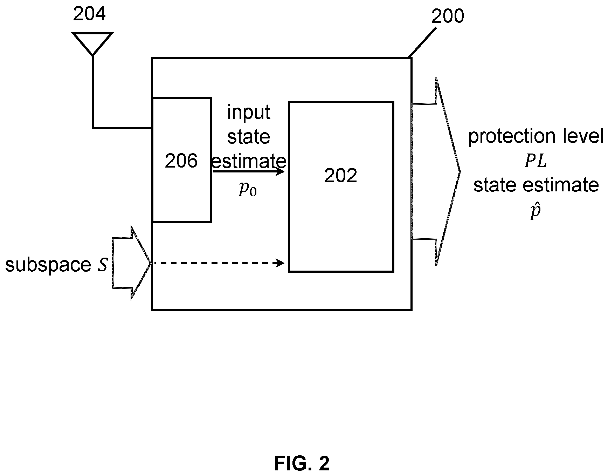

Figure 2 shows a block diagram of a device 200 consistent with some embodiments of the present disclosure. The device 200 can be any of a computer, a wireless terminal, a wireless handheld device, or wireless personal device. In an example, the device 200 is a GNSS positioning device, the state estimate *p̂* is GNSS navigation solution, the device 200 also providing as output the protection level *PL* associated with the GNSS navigation solution.

The GNSS positioning device 200 includes a processor 202, and typically an antenna 204 coupled to a receiver 206, for receiving a GNSS signal. The processor 202 is at least configured for executing the method for computing a protection level *PL* of a state estimate *p̂*. The processor 202 receives as input, at least the following: an input state estimate *p*₀ and a given subspace S.

The processor 202 and the receiver 206 may be implemented as a single device or as separate devices. Although not shown, the GNSS position device 200 further includes a memory and a local clock.

The processor 202 may include a functionality wherein the computed protection level *PL* is used to decide whether an alarm needs to be raised when the protection level *PL* exceeds a predefined threshold.

In this text, the term "includes", "comprises" and derivations thereof (such as "including", "comprising", etc.) should not be understood in an excluding sense. The disclosure is obviously not limited to the specific embodiment(s) described herein, but also encompasses any variations that may be considered by any person skilled in the art within the general scope of the invention as defined in the claims.

## Claims

1. A computer implemented method for computing a protection level *PL* of a state estimate *p̂* from a provided input state estimate *p*₀; the method comprising:
- obtaining an initial state estimate *p_{c}* which lies in a given subspace *S*;
- obtaining a matrix *F* of partial derivatives of a local parametrisation f of the given subspace *S* around the initial state estimate *p_{c}*, which local parametrisation *f* is a function of a set of parameters *α*;
- computing the state estimate *p̂* as follows: $\hat{p} = {p}_{c} + F ⋅ Δ α$ wherein:
∘ $Δ α = {\left({\hat{H}}^{T}W\hat{H}\right)}^{- 1} {\hat{H}}^{T} {Wr}_{c} ,$
∘ $\hat{H} = H ⋅ F ,$
∘ *H* is a provided observation matrix,
∘ *W* is a weighting matrix which is either provided as input to the method or defined to be the identity matrix,
∘ *r_{c}* is an initial vector of residuals computed as: ${r}_{c} = {r}_{0} + H \left({p}_{0}-{p}_{c}\right)$ *r*₀ being a provided input vector of residuals;
wherein the protection level *PL* of the state estimate *p̂* is computed as: $PL = k ⋅ {\left‖\hat{r}\right‖}_{W} ⋅ G$ where:
∘ *k* is a scalar factor,
∘ *r̂* is vector of residuals, ${\left‖\hat{r}\right‖}_{W} = \sqrt{{\hat{r}}^{T} W \hat{r}}$, and
∘ *G is* a geometric factor computed using the matrix *F.*

2. The method of claim 1, wherein the given subspace *S* is defined through a set of implicit equations: $S = \left\{p : ψ\left(p\right)=0\right\}$ and wherein:
- *ψ*(*p*) is a function of a state vector *p*;
- the initial state estimate *p_{c}* is computed as: ${p}_{c} = {p}_{0} + {\left({\overline{H}}^{T}\overline{W}\overline{H}\right)}^{- 1} {\overline{H}}^{T} \overline{W} \overline{r}$ wherein:
∘ *H̅* is an augmented observation matrix constructed using the observation matrix *H* and a matrix Ψ of partial derivatives of *ψ* as: $\overline{H} = \left[\begin{matrix}H \\ Ψ\end{matrix}\right] ,$
∘ *W̅* is an augmented weighting matrix computed as: $\overline{W} = \left[\begin{matrix}W & 0 \\ 0 & {W}_{S}\end{matrix}\right] ,$ where *W_{S}* is a scalar matrix of size equal to a codimension *c* of the subspace *S*,
∘ *r̅* is an augmented vector of residuals computed as: $\overline{r} = \left[\begin{matrix}{r}_{0} \\ {r}_{S}\end{matrix}\right]$ where *r*₀ is the input vector of residuals and *r_{S}* = -*ψ*(*p*₀);
- the matrix *F* is computed as: $F = {\left.\left(\begin{matrix}I \\ - {\left(\frac{\partial ψ}{\partial y}\right)}^{- 1} ⋅ \left(\frac{\partial ψ}{\partial x}\right)\end{matrix}\right)\right|}_{{p}_{c}}$ wherein:
∘ $\left(\frac{\partial ψ}{\partial x}\right)$ is the matrix of partial derivatives of *ψ* with respect to *x*,
∘ $\left(\frac{\partial ψ}{\partial y}\right)$ is the matrix of partial derivatives of *ψ* with respect to *y*,
∘ *y* is a subset of the components of the state vector *p* such that the matrix $\left(\frac{\partial ψ}{\partial y}\right)$ evaluated at the initial state estimate *p_{c}* is invertible,
∘ *x* is the subset of the components of the state vector *p* complementary to *y*.

3. The method of claim 1, wherein the step of obtaining the initial state estimate *p_{c}* in the given subspace *S* comprises selecting a point in the given subspace *S* within a given maximum distance *d* of the input state estimate *p*₀, and wherein the local parametrisation *f* of the given subspace *S* around the initial state estimate *p_{c}* is provided as input.

4. The method of claim 1, wherein the step of obtaining the initial state estimate *p_{c}* in the given subspace *S* comprises selecting the closest point to the point position of the input state estimate *p*₀ in the given subspace *S,* and wherein the local parametrisation *f* of the given subspace *S* around the initial state estimate *p_{c}* is provided as input.

5. The method of any one of claims 3-4, wherein the matrix *F* is computed as the matrix of partial derivatives of the parametrisation *f* at *α_{c}*: $F = {\left.\left(\frac{\partial f}{\partial α}\right)\right|}_{{α}_{c}}$ wherein *α_{c}* is the set of parameters which maps into the initial state estimate *p_{c}* through the local parametrisation *f.*

6. The method of any one of claims 1-5, wherein the final vector of residuals *r̂* is computed as: $\hat{r} = {r}_{c} - \hat{H} ⋅ Δ α$

7. The method of any one of claims 1-5, wherein the final vector of residuals *r̂* is computed as: $\hat{r} = {r}_{c} + H \left({p}_{c}-\hat{p}\right)$

8. The method of any one of claims 1-7, wherein the geometric factor *G* is a vector computed as: $G = \left({G}_{{α}_{1}},{G}_{{α}_{2}},…,{G}_{{α}_{n}}\right)$ wherein:
- *n is* any positive integer with *n* ≤ *m*, where *m* is the dimension of the subspace *S*;
- *α*₁, *α*₂, ... , *αₙ* are *n* of the m components of the set of parameters *α*, and
- for each *i* ∈ {1,2, ..., *n*}: ${G}_{{α}_{i}} = {D}_{{α}_{i}} ⋅ \left‖{\left.\frac{\partial f}{\partial {α}_{i}}\right|}_{\hat{α}}\right‖$ wherein:
∘ *D_{αᵢ}* is computed as ${D}_{{α}_{i}} = \sqrt{{D}_{{α}_{i}}^{2}}$ and ${D}_{{α}_{i}}^{2}$ is taken from a dilution of precision matrix *DOP*, which dilution of precision matrix *DOP* takes the form: $DOP = \left(\begin{matrix}{D}_{{α}_{1}}^{2} & {D}_{{α}_{1} {α}_{2}} & ⋯ & {D}_{{α}_{1} {α}_{m}} \\ {D}_{{α}_{2} {α}_{1}} & {D}_{{α}_{2}}^{2} & ⋯ & {D}_{{α}_{2} {α}_{m}} \\ ⋮ & ⋮ & ⋱ & ⋮ \\ {D}_{{α}_{m} {α}_{1}} & {D}_{{α}_{m} {α}_{2}} & ⋯ & {D}_{{α}_{m}}^{2}\end{matrix}\right)$ and which dilution of precision matrix *DOP* is computed as: $DOP = {\left({\hat{H}}^{T}W\hat{H}\right)}^{- 1} ,$
∘ *α̂*is the set of parameters which maps into the state estimate *p̂* through the local parametrisation *f*.

9. The method of any one of claims 1-7, wherein the geometric factor *G* is computed as: $G = \sqrt{{G}_{{α}_{1}}^{2} + {G}_{{α}_{2}}^{2} + ⋯ + {G}_{{α}_{n}}^{2}}$ wherein:
- *n is* any positive integer with *n* ≤ *m*, where m is the dimension of the subspace *S*;
- *α*₁, *α*₂, ... , *αₙ* are *n* of the m components of the set of parameters *α*, and
- for each *i* ∈ {1,2, ..., *n*}: ${G}_{{α}_{i}} = {D}_{{α}_{i}} ⋅ \left‖{\left.\frac{\partial f}{\partial {α}_{i}}\right|}_{\hat{α}}\right‖$ wherein:
∘ *D_{αᵢ}* is computed as ${D}_{{α}_{i}} = \sqrt{{D}_{{α}_{i}}^{2}}$ and ${D}_{{α}_{i}}^{2}$ is taken from a dilution of precision matrix *DOP*, which dilution of precision matrix *DOP* takes the form: $DOP = \left(\begin{matrix}{D}_{{α}_{1}}^{2} & {D}_{{α}_{1} {α}_{2}} & ⋯ & {D}_{{α}_{1} {α}_{m}} \\ {D}_{{α}_{2} {α}_{1}} & {D}_{{α}_{2}}^{2} & ⋯ & {D}_{{α}_{2} {α}_{m}} \\ ⋮ & ⋮ & ⋱ & ⋮ \\ {D}_{{α}_{m} {α}_{1}} & {D}_{{α}_{m} {α}_{2}} & ⋯ & {D}_{{α}_{m}}^{2}\end{matrix}\right)$ and which dilution of precision matrix *DOP* is computed as: $DOP = {\left({\hat{H}}^{T}W\hat{H}\right)}^{- 1} ,$
∘ *α̂* is the set of parameters which maps into the state estimate *p̂* through the local parametrisation *f*.

10. The method of any one of claims 1-7, wherein the geometric factor *G* is computed as: $G = \sqrt{1 / λ}$ wherein *λ* is the smallest positive eigenvalue of *A*, *A* being a matrix computed as: $A = BCB ,$
- matrix *B* being in turn computed as: $B = {F}_{1} {\left({F}_{1}^{T}{F}_{1}\right)}^{- 1} {F}_{1}^{T} ,$ matrix *F*₁ being a submatrix of the matrix *F* obtained by splitting the matrix *F* into submatrices *F*₁ and *F*₂ corresponding to the first *n* parameters *α*₁, *α*₂, ..., *αₙ* and the last m - *n* parameters α_{*n*+1}, *α*_{*n+*2}, ..., *αₘ* in *α*, respectively, as follows: $F = \left({F}_{1} {F}_{2}\right)$
- *n* being any positive integer with *n* ≤ *m*, where m is the dimension of the subspace *S*;
- matrix *C* being computed as follows: $C = E - {EF}_{2} {\left({F}_{2}^{T}{EF}_{2}\right)}^{- 1} {F}_{2}^{T} E$ matrix *E* being computed as: $E = {H}^{T} WH .$

11. The method of any preceding claim, wherein the state estimate *p̂* is a GNSS navigation solution and the protection level *PL* is compared against a threshold to make a decision regarding the reliability of the navigation solution.

12. The method of any preceding claim, wherein the subspace *S* is defined by means of a digital elevation model.

13. The method of any of claims 1-11, wherein the subspace *S* is defined as a railway network or road network or a digital map thereof.

14. A device comprising a processor configured to carry out the method of any of the preceding claims.

15. The device of claim 14, wherein the device is a GNSS positioning device configured to provide a GNSS navigation solution and associated protection level *PL.*

## Amended claims

### Amended claims in accordance with Rule 137(2) EPC.

1. A computer implemented method for computing a protection level *PL* of a state estimate p from a provided input state estimate *p*₀; the method comprising the following steps run by a device:
- obtaining an initial state estimate *p_{c}* which lies in a given subspace S;
- obtaining a matrix F of partial derivatives of a local parametrisation f of the given subspace S around the initial state estimate *p_{c},* which local parametrisation *f* is a function of a set of parameters *α*;
- computing the state estimate p as follows: $\hat{p} = {p}_{c} + F ⋅ Δ α$ wherein:
o $Δ α = {\left({\hat{H}}^{T}W\hat{H}\right)}^{- 1} {\hat{H}}^{T} {Wr}_{c} ,$
o $\hat{H} = H ⋅ F ,$
o *H* is a provided observation matrix,
o *W* is a weighting matrix which is either provided as input to the method or defined to be the identity matrix,
o *r_{c}* is an initial vector of residuals computed as: ${r}_{c} = {r}_{0} + H \left({p}_{0}-{p}_{c}\right)$ *r*₀ being a provided input vector of residuals;
wherein the protection level *PL* of the state estimate *p̂* is computed as: $PL = k ⋅ {\left‖\hat{r}\right‖}_{W} ⋅ G$ where:
o *k* is a scalar factor,
o *r̂* is vector of residuals, ${\left‖\hat{r}\right‖}_{W} = \sqrt{{\hat{r}}^{T} W \hat{r}}$*,* and
o *G* is a geometric factor computed using the matrix *F*;
wherein the state estimate *p* is a navigation solution and the computed protection level *PL* is compared against a threshold, the method comprising making a decision regarding the reliability of the navigation solution.

2. The method of claim 1, wherein the given subspace *S* is defined through a set of implicit equations: $S = \left\{p:ψ\left(p\right)=0\right\}$ and wherein:
- *ψ*(*p*) is a function of a state vector *p*;
- the initial state estimate *p_{c}* is computed as: ${p}_{c} = {p}_{0} + {\left({\overline{H}}^{T}\overline{W}\overline{H}\right)}^{- 1} {\overline{H}}^{T} \overline{W} \overline{r}$ wherein:
o *H̅* is an augmented observation matrix constructed using the observation matrix *H* and a matrix Ψ of partial derivatives of *ψ* as: $\overline{H} = \left[\begin{matrix}H \\ Ψ\end{matrix}\right] ,$
o *W̅* is an augmented weighting matrix computed as: $\overline{W} = \left[\begin{matrix}W & 0 \\ 0 & {W}_{S}\end{matrix}\right] ,$ where *W_{S}* is a scalar matrix of size equal to a codimension c of the subspace *S*,
o *r̅* is an augmented vector of residuals computed as: $\overline{r} = \left[\begin{matrix}{r}_{0} \\ {r}_{S}\end{matrix}\right]$ where *r*₀ is the input vector of residuals and *r_{S}* = -*ψ*(*p*₀);
- the matrix *F* is computed as: ${\left.F=\left(\begin{matrix}I \\ - {\left(\frac{\partial ψ}{\partial y}\right)}^{- 1} ⋅ \left(\frac{\partial ψ}{\partial x}\right)\end{matrix}\right)\right|}_{{p}_{c}}$ wherein:
o $\left(\frac{\partial ψ}{\partial x}\right)$ is the matrix of partial derivatives of *ψ* with respect to *x*,
o $\left(\frac{\partial ψ}{\partial y}\right)$ is the matrix of partial derivatives of *ψ* with respect to *y*,
o *y* is a subset of the components of the state vector *p* such that the matrix $\left(\frac{\partial ψ}{\partial y}\right)$ evaluated at the initial state estimate *p_{c}* is invertible,
o *x* is the subset of the components of the state vector *p* complementary to *y*.

3. The method of claim 1, wherein the step of obtaining the initial state estimate *p_{c}* in the given subspace *S* comprises selecting a point in the given subspace *S* within a given maximum distance *d* of the input state estimate *p*₀, and wherein the local parametrisation *f* of the given subspace S around the initial state estimate *p_{c}* is provided as input.

4. The method of claim 1, wherein the step of obtaining the initial state estimate *p_{c}* in the given subspace *S* comprises selecting the closest point to the point position of the input state estimate *p*₀ in the given subspace *S,* and wherein the local parametrisation *f* of the given subspace *S* around the initial state estimate *p_{c}* is provided as input.

5. The method of any one of claims 3-4, wherein the matrix *F* is computed as the matrix of partial derivatives of the parametrisation *f* at *α_{c}*: ${\left.F=\left(\frac{\partial f}{\partial α}\right)\right|}_{{α}_{c}}$ wherein *α_{c}* is the set of parameters which maps into the initial state estimate *p_{c}* through the local parametrisation *f.*

6. The method of any one of claims 1-5, wherein the final vector of residuals *r̂* is computed as: $\hat{r} = {r}_{c} - \hat{H} ⋅ Δ α$

7. The method of any one of claims 1-5, wherein the final vector of residuals *r̂* is computed as: $\hat{r} = {r}_{c} + H \left({p}_{c}-\hat{p}\right)$

8. The method of any one of claims 1-7, wherein the geometric factor *G* is a vector computed as: $G = \left({G}_{{α}_{1}},{G}_{{α}_{2}},…,{G}_{{α}_{n}}\right)$ wherein:
- *n* is any positive integer with *n* ≤ *m*, where *m* is the dimension of the subspace *S*;
- *α*₁, *α*₂, *... , αₙ* are *n* of the m components of the set of parameters *α,* and
- for each *i* ∈ {1,2, ... , *n*}: ${G}_{{α}_{i}} = {D}_{{α}_{i}} ⋅ \left‖{\left.\frac{\partial f}{\partial {α}_{i}}\right|}_{\hat{α}}\right‖$ wherein:
o *D_{αi}* is computed as ${D}_{{α}_{i}} = \sqrt{{D}_{{α}_{i}}^{2}}$ and ${D}_{{α}_{i}}^{2}$ is taken from a dilution of precision matrix *DOP,* which dilution of precision matrix *DOP* takes the form: $DOP = \left(\begin{matrix}{D}_{{α}_{1}}^{2} & {D}_{{α}_{1} {α}_{2}} & ⋯ & {D}_{{α}_{1} {α}_{m}} \\ {D}_{{α}_{2} {α}_{1}} & {D}_{{α}_{2}}^{2} & ⋯ & {D}_{{α}_{2} {α}_{m}} \\ ⋮ & ⋮ & ⋱ & ⋮ \\ {D}_{{α}_{m} {α}_{1}} & {D}_{{α}_{m} {α}_{2}} & ⋯ & {D}_{{α}_{m}}^{2}\end{matrix}\right)$ and which dilution of precision matrix *DOP* is computed as: $DOP = {\left({\hat{H}}^{T}W\hat{H}\right)}^{- 1} ,$
o *α̂* is the set of parameters which maps into the state estimate *p̂* through the local parametrisation *f.*

9. The method of any one of claims 1-7, wherein the geometric factor *G* is computed as: $G = \sqrt{{G}_{{α}_{1}}^{2} + {G}_{{α}_{2}}^{2} + ⋯ + {G}_{{α}_{n}}^{2}}$ wherein:
- *n is* any positive integer with *n* ≤ *m*, where *m* is the dimension of the subspace *S*;
- *α*₁, *α*₂, *... , αₙ* are *n* of the *m* components of the set of parameters *α,* and
- for each *i* ∈ {1,2, ... , *n*}: ${G}_{{α}_{i}} = {D}_{{α}_{i}} ⋅ \left‖{\left.\frac{\partial f}{\partial {α}_{i}}\right|}_{\hat{α}}\right‖$ wherein:
o *D_{αi}* is computed as ${D}_{{α}_{i}} = \sqrt{{D}_{{α}_{i}}^{2}}$ and ${D}_{{α}_{i}}^{2}$ is taken from a dilution of precision matrix *DOP,* which dilution of precision matrix *DOP* takes the form: $DOP = \left(\begin{matrix}{D}_{{α}_{1}}^{2} & {D}_{{α}_{1} {α}_{2}} & ⋯ & {D}_{{α}_{1} {α}_{m}} \\ {D}_{{α}_{2} {α}_{1}} & {D}_{{α}_{2}}^{2} & ⋯ & {D}_{{α}_{2} {α}_{m}} \\ ⋮ & ⋮ & ⋱ & ⋮ \\ {D}_{{α}_{m} {α}_{1}} & {D}_{{α}_{m} {α}_{2}} & ⋯ & {D}_{{α}_{m}}^{2}\end{matrix}\right)$ and which dilution of precision matrix *DOP* is computed as: $DOP = {\left({\hat{H}}^{T}W\hat{H}\right)}^{- 1} ,$
o *α̂* is the set of parameters which maps into the state estimate *p̂* through the local parametrisation *f.*

10. The method of any one of claims 1-7, wherein the geometric factor *G* is computed as: $G = \sqrt{1 / λ}$ wherein *λ* is the smallest positive eigenvalue of *A, A* being a matrix computed as: $A = BCB ,$
- matrix *B* being in turn computed as: $B = {F}_{1} {\left({F}_{1}^{T}{F}_{1}\right)}^{- 1} {F}_{1}^{T} ,$ matrix *F*₁ being a submatrix of the matrix *F* obtained by splitting the matrix *F* into submatrices *F*₁ and *F*₂ corresponding to the first *n* parameters *α*₁, *α*₂, *..., αₙ* and the last *m* - *n* parameters *α*_{*n*+1}, *α*_{*n*+2}, ... , *αₘ* in *α,* respectively, as follows: $F = \left({F}_{1} {F}_{2}\right)$
- *n* being any positive integer with *n* ≤ *m*, where *m* is the dimension of the subspace S;
- matrix *C* being computed as follows: $C = E - {EF}_{2} {\left({F}_{2}^{T}{EF}_{2}\right)}^{- 1} {F}_{2}^{T} E$ matrix *E* being computed as: $E = {H}^{T} WH .$

11. The method of any preceding claim, wherein making a decision comprises considering the provided navigation solution unsafe.

12. The method of any preceding claim, wherein the subspace S is defined by means of a digital elevation model or wherein the subspace S is defined as a railway network or road network or a digital map thereof.

13. The method of any of claims 1-12, wherein the method further comprises taking some action if the computed protection level *PL* is above a pre-established threshold, wherein taking some action may include raising an alarm by the device..

14. A device comprising a processor configured to carry out the method of any of the preceding claims.

15. The device of claim 14, wherein the device is a GNSS positioning device configured to provide a GNSS navigation solution and associated protection level *PL.*
